Europäisches Patentamt

European Patent Office

Office européen des brevets

(19)

(11) **EP 0 466 414 B1**

(12) **EUROPEAN PATENT SPECIFICATION**

(45) Date of publication and mention
of the grant of the patent:
**18.09.1996 Bulletin 1996/38**

(51) Int Cl.⁶: **G11B 15/18**, G11B 15/46,
G11B 15/00, G11B 27/10

(21) Application number: **91306124.8**

(22) Date of filing: **05.07.1991**

(54) **Tape location control apparatus**

Verfahren zur Bandstandskontrolle

Dispositif de contrôle de position de bande

(84) Designated Contracting States:
**DE FR GB**

(30) Priority: **10.07.1990 JP 180607/90**

(43) Date of publication of application:
**15.01.1992 Bulletin 1992/03**

(73) Proprietor: **SONY CORPORATION
Tokyo 141 (JP)**

(72) Inventors:
• **Hirano, Yoshiaki, c/o Patents Division
Shinagawa-ku Tokyo 141 (JP)**

• **Noshiro, Teruhito, c/o Patents Division
Shinagawa-ku Tokyo 141 (JP)**
• **Shimizu, Takamoto, c/o Patents Division
Shinagawa-ku Tokyo 141 (JP)**

(74) Representative: **Pilch, Adam John Michael et al
D. YOUNG & CO.,
21 New Fetter Lane
London EC4A 1DA (GB)**

(56) References cited:
**EP-A- 0 176 301          WO-A-88/08193
FR-A- 2 632 800          US-A- 3 737 751
US-A- 4 315 286**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

This invention relates to tape location control apparatus such as may be used in a tape recorder for determination of head position, for example during editing of a digital audio tape or a video tape.

In recent years, there have arisen many situations in which digital recording is carried out, such as when preparing a master tape for making up optical digital audio discs such as compact discs or similar, or digital audio software such as digital audio tapes. Many processes including the recording process up to the cutting process are carried out digitally. Such equipment for commercial use is required to have high accuracy and good functionality. For example, the function of making an access to a desired target position or location on the tape at a high velocity leads to reduced editing time. This therefore leads to reduced cost. Such a high velocity access to a preselected location on a tape is carried out by a tape position or location control.

In order to carry out the tape location control, it has been proposed to provide an auxiliary track on which, for example, tape location information is recorded on a recording format of the tape, allowing the auxiliary track to be reproduced as a result of which the tape location can be detected. So-called control (CTL) tracks or time code (TC) tracks can be used as the auxiliary track. Further, it has also been proposed to measure the rotation of a tape reel platform, tape contact roller, or timer roller to detect the tape location.

As operational modes for carrying out tape location control by using tape location information detected by these methods, there are known a control (CTL) mode for carrying out location control by making use of the sector address on the control track, a timer mode for carrying out location control by using a count value of a timer roller, and a time code (TC) mode for carrying out location control by using a time code on the time code track.

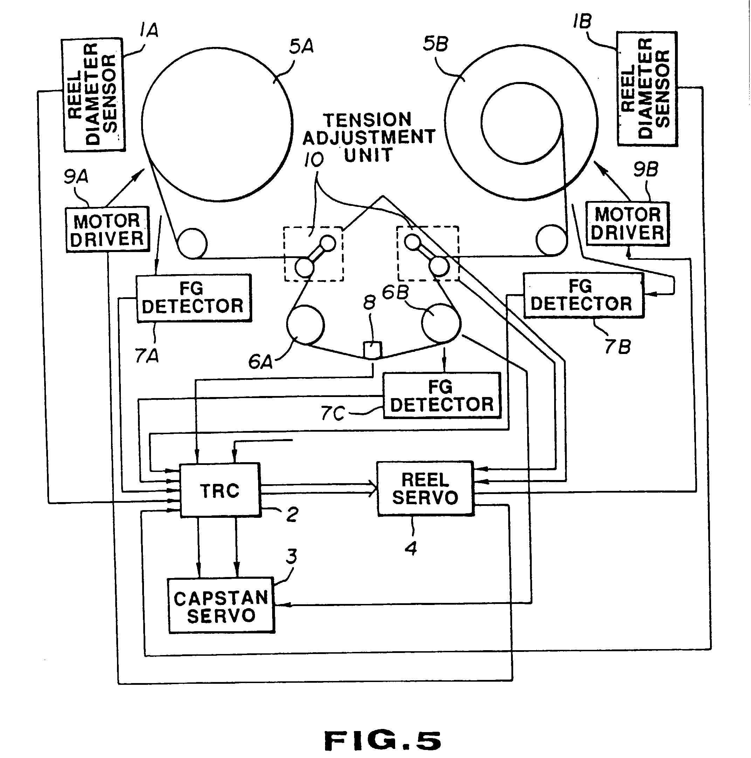

The outline configuration of a tape running and driving system including a servo system for tape location control will now be described with reference to Figure 5 of the accompanying drawings.

In Figure 5, tape reel diameter sensors 1A and 1B first detect the diameters of respective reels 5A and 5B of a tape being used, and send information as to the detected diameters to a tape running system control (TRC) unit 2. The tape running system control unit 2 also receives FG signals from frequency generation (FG) signal detectors 7A to 7C for respectively detecting the rotation of reels 5A and 5B and capstan rollers 6A and 6B, control data or time code data detected at a reproducing magnetic head 8, and a mode switching signal. The tape running system control unit 2 carries out processing on the basis of these signals to send a clutch ON/OFF control signal, a frequency generation/control (FG/CTL) servo signal or the like, to a capstan servo circuit 3. Responding to these signals, the capstan servo circuit 3 drives and controls the rotation of the capstan rollers 6A and 6B. Further, the tape running system control unit 2 sends to a reel servo circuit 4 an ON/OFF control signal for the velocity servo, a velocity servo gain adjustment signal, an ON/OFF control signal for the tape position control gain, a tension setting signal, and an indication voltage signal. The reel servo circuit 4 controls motor drivers 9A and 9B to drive and control the rotation of the respective reel motors. In addition, a tension detected value from a tension adjustment unit 10 is fed to the reel servo circuit 4.

The reel servo circuit 4 determines the difference between the above-mentioned detected current tape position and a target tape position to be accessed, in the form of a so-called address difference (ADR-DIF), to drive and control the reel motors so that the tape running velocity varies in accordance with a velocity (target indication velocity) determined in advance in correspondence with the address difference (ADR-DIF). The above-mentioned target indication velocity (TGV) in this case has a distance-velocity characteristic curve such that, for example, the tape running velocity assumes a fast value at a position relatively far from the target tape location, the velocity assuming a slower value as the distance to the target position decreases, the tape running being finally stopped at the target location. Thus, such tape location control allows the tape to make an access to the target tape location smoothly but at a high velocity. In this case, the steps of inputting data indicative of the address difference (ADR-DIF) to a predetermined target indication velocity table read only memory (ROM), reading out a corresponding target indication velocity (TGV-LOC), adding/subtracting an acceleration rate every predetermined sampling period (such as 10 ms), and thereafter providing a limit at a limit velocity, are carried out by digital signal processing. The output data is in the form of an actual indication velocity (CUR-TGV), and is sent through a digital-to-analog (D/A) converter to an analog servo circuit unit having a velocity servo loop as a minor loop, at which a servo operation is carried out so that an error (velocity deviation) between an actual tape velocity and the above-mentioned indication velocity data (CUR-TGV) becomes equal to zero.

The locate control curve, that is the curve indicating the target indication velocity (TGV-LDC) with respect to the address difference (ADR-DIF), set in the above mentioned ROM table, is determined in advance by calculation in consideration of the maximum velocity of the maximum acceleration rate of the reel servo system or the like. In practice, the calculation is typically performed on the assumption that the maximum velocity is 16 m/s, and the maximum acceleration rate is about 8 $m/s^2$ in the case of a 10 inch (25 cm) reel and about 3 $m/s^2$ in the case of a 14 inch (35 cm) reel.

When attempting to carry out a tape location control as described above, since the loop gain of the velocity servo-tension servo cannot become infinity in practice, the response cannot follow with accuracy. For example, in the case of a ramp response, the velocity deviation cannot become zero. Thus a velocity deviation proportional to the time constant and the acceleration, and inversely proportional to the gain, is necessarily present. For this reason, the actual velocity with respect to the indication velocity (CUR-TGV) of the reel servo increases by the magnitude of the velocity deviation. As the acceleration rate increases, its deviation likewise increases. Therefore, when considering, for example, the 10 inch reel (acceleration rate 8 m/s$^2$) and the 14 inch reel (acceleration rate 3 m/s$^2$), the velocity deviation of the 10 inch reel is 8/3 times greater than that of the 14 inch reel. This is because, even if control is effected so that the operation is performed at the same indication speed, respective acceleration rates vary by the difference between respective inertial moments associated with the reel diameters.

Also, in the previously-described operational mode of the location control, since the sampling rate in the TC mode is coarser than that in the CTL mode, there occurs a time delay in the TC mode about 30 to 42 times greater than that in the CTL mode.

As a result of the above-described velocity deviation, as shown in Figure 6, in the CTL mode there occurs an error between a curve b indicating the target indication velocity data (TGV-LOC) and a curve a indicating the indication velocity data (CUR-TGV) for the reel servo. On the other hand, in the TC mode, the velocity deviation is the same as that in the case of the CTL mode, but a difference between a curve c indicating the target indication velocity data (TGV-LOC) and the curve a indicating the indication velocity data (CUR-TGV) in the TC mode is further increased, as shown in Figure 6, by the time delay corresponding to the sampling time.

In either mode, because of velocity deviation with respect to an actual velocity and a time delay due to sampling, the acceleration rate of the target indication velocity (TGV-LOC) will become greater than 8 m/s$^2$ in the case of the 10 inch reel. As a result, the indication velocity is unable to follow.

US Patent No. US-A-3 737 751 discloses a motor control mechanism as reflected by the preamble of claim 1, suitable for use in a tape drive mechanism, in which the motor can be stopped within a preselected distance by a control system comparing the actual motor velocity/distance stop profile with a nominal profile to generate an error signal. The motor is controlled by the error signal so as to aim to attain the nominal profile by the next checking position.

According to the invention there is provided tape location control apparatus for controlling transportation of a tape in accordance with a location on said tape by controlling the rotational velocity of a reel motor for driving said tape, said apparatus comprising:

means for detecting a current location on said tape;
means for generating a signal in accordance with a distance between said current location and a preselected location on said tape; and
motor drive means responsive to said signal to control the rotational velocity of said reel motor;
wherein said signal is corrected according to an estimated deviation which is a difference between an optimum desired rotational velocity at which said reel motor should be ideally driven and the actual velocity at which said reel motor is driven by said motor drive means;
characterised in that the corrected signal is generated by said signal generating means in accordance with the following equations;

$$y = a \sqrt{x - x2} \qquad \text{when } x \geqq x3$$

$$y = b (x - x1) + y1 \qquad \text{when } x1 \leqq x < x3$$

$$y = y1 \qquad \text{when } x0 \leqq x < x1$$

$$y = 0 \qquad \text{when } x < x0$$

$$a = \sqrt{2\alpha}$$

$$b = a \sqrt{x3 - x2} / x3$$

where y is the desired rotational velocity of said reel motor, x is said distance, x0 is a required accuracy in location control, $\alpha$ is the acceleration of said reel motor, and $x_3 > x_2 > x_1$, x1, x2, x3 and y1 being values calculated in accordance with $\alpha$, wherein $\alpha$ is corrected in accordance with said estimated deviation .

In accordance with a preferred embodiment of the invention, described more fully below, the approach is to correct a signal generated in accordance with the distance between a current location and a preselected location on the tape in consideration of an estimated deviation which is the difference between an optimum rotational velocity at which the reel motor should ideally be driven and an actual rotational velocity at which the reel motor is driven in practice by the motor drive means. Thus high accuracy can be achieved and smooth tape location control operation can be performed in any operational mode.

The invention will now be described by way of example with reference to the accompanying drawings, in which:

Figure 1 is a block diagram of a location control apparatus for a tape recorder according to an embodiment of this invention;

Figure 2 is a graph showing curves representing a target indication velocity (TGV-LOC) with respect to an address difference;

Figure 3 is a graph showing an actual example of a corrected location control characteristic curve in the TC mode;

Figure 4 is a graph showing the difference between an actual indication velocity curve (NORM) and an adjusted curve (ADJUST) in accordance with the relationship between the actual velocity and the time;

Figure 5 is a block diagram showing the outline configuration of a tape running and driving system including the servo system for tape location control; and

Figure 6 is a graph showing the relationship between the target indication velocity and the indication velocity for the reel servo in the CTL and TC modes.

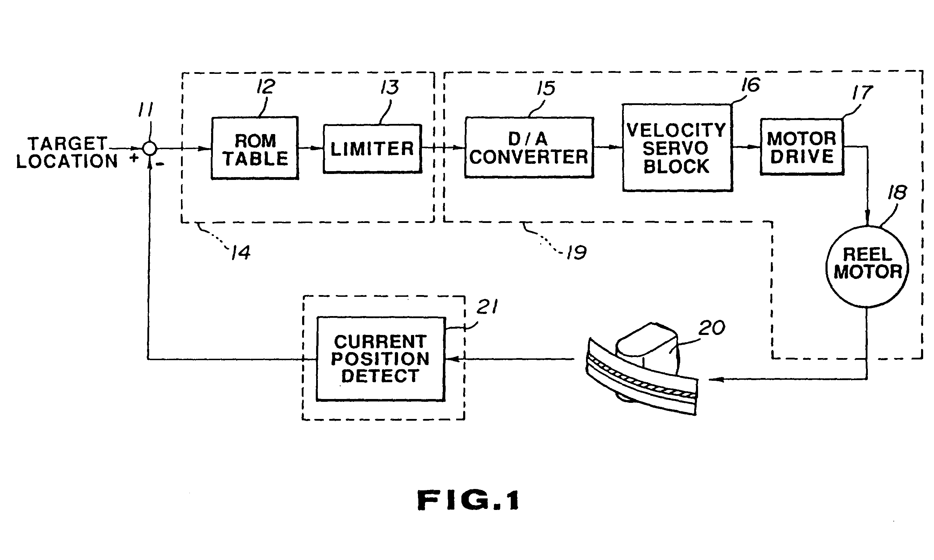

Figure 1 is a block diagram showing the outline configuration of a servo system of a location control apparatus for a tape recorder according to an embodiment of this invention. In Figure 1, signals indicative of a current tape location and a target tape location are delivered to a subtracter 11 which provides the difference therebetween. In more detail, a desired target tape location to be accessed for editing work or the like, and current tape location information based on time code data or similar as read by a magnetic head 20, are supplied to the subtracter 11. The subtracter 11 subtracts the current tape location from the target tape location to determine a positional error, or so-called address difference (ADR-DIF), and sends this to a ROM table 12 of a software control unit 14. The ROM table 12 outputs target indication velocity data (TGV-LOC) on the basis of the address difference (ADR-DIF) which is the tape location error. In the software control unit 14, additive/subtractive operation of an acceleration rate is performed in accordance with data, for example every 10 ms, on the basis of target indication velocity data (TGV-LOC) to limit the velocity data to a limited velocity by means of a limiter 13, thereafter to output the resulting limited data as indication velocity data (CUR-TGV) for reel servo operation. The indication velocity data (CUR-TGV) from the software control unit 14 is then supplied to a hardware control unit 19. The hardware control unit 19 includes a D/A converter 15, a velocity servo block 16, a motor drive circuit 17, and a reel motor 18, thereby forming a velocity servo/tension servo loop. The hardware control unit 19 carries out velocity control such that the tape running velocity is made to correspond with the output signal (CUR-TGV) from the software control unit 14. The reel servo is put into effect so that an error between the indication velocity data (CUR-TGV) as a target value and the actual tape running velocity becomes equal to zero.

The location control characteristic curve stored in the ROM table 12, particularly the curve indicating the target indication velocity (TGV-LOC) with respect to the address difference (ADR-DIF), is subjected to a corrective operation corresponding to a velocity deviation (the difference between the indication velocity given as a servo target and the actual velocity) in the reel servo system. In actual terms, in the process of calculating the target indication velocity (TGV-LOC) with respect to the address difference (ADR-DIF), an acceleration rate is set by taking the velocity deviation into account. For example, in the case of the acceleration rate $8$ m/s$^2$ for the 10 inch reel, when the operational mode is the CTL mode, this acceleration rate is calculated by using a value changed to $6.4$ m/s$^2$ to set a curve thereby to ensure that the acceleration rate at an actual tape running velocity by a velocity deviation necessarily occurring at the time of an actual servo operation becomes equal to $8$ m/s$^2$, even in the worst case.

Further, when the operational mode is the TC mode (which is the reel servo mode using the previously described time code), since there is the problem of time delay due to sampling coarseness, the case of the CTL mode is taken as a reference to optimise operation so that it is adapted for TC mode, thus setting a curve of the target indication velocity (TGV-LOC) with respect to the address difference (ADR-DIF).

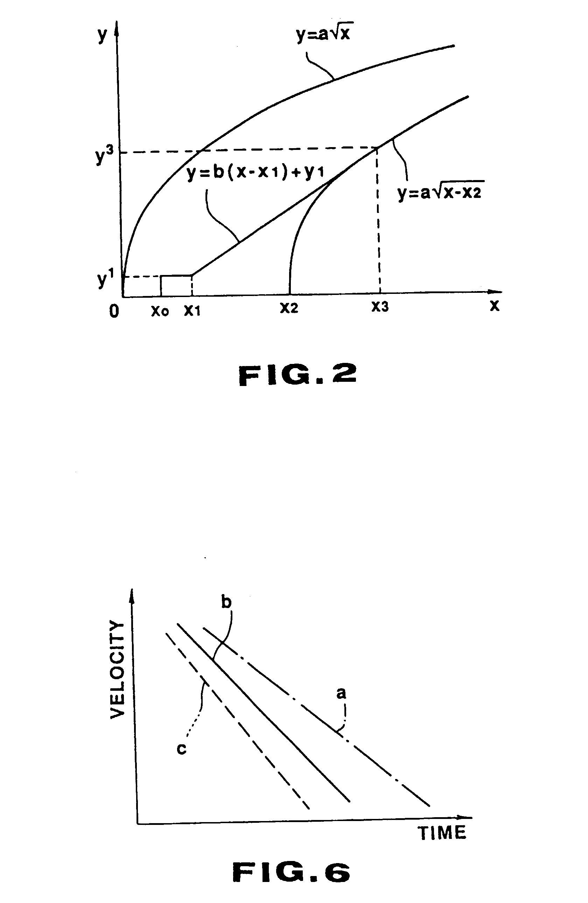

The method of setting such a curve of the target indication velocity (TGV-LOC) with respect to the address difference (ADR-DIF) will now be described with reference to Figure 2.

In Figure 2, the target indication velocity (TGV-LOC) is represented as y on the ordinate and the address difference (ADR-DIF) is represented as x on the abscissa, wherein x=O corresponds to the target address location. At the time of a fixed acceleration rate, the target indication velocity (TGV-LOC) is expressed as a function of the 1/2-th power of the address difference (ADR-DIF). In this case, however, setting is made for an actual target value as follows. A location slightly in advance thereof is initially set as a target value by adding a predetermined offset so that the target indication velocity does not overrun the actual target value even if it overruns the set target value. Further, when the address difference falls within a predetermined range, the function indicating the target indication velocity is caused to be in the form of a straight line so as to output a voltage proportional to the address difference.

The tape location or the address difference x at the time of a fixed acceleration rate $\alpha$ is expressed as a function of the second power of the time. By using, as a reference, the time when tape running is stopped, replacement of the time before the tape running is stopped by T gives

$$x = \frac{1}{2} \alpha T^2$$

In this instance, the velocity y is expressed as follows:

$$y = \alpha T$$

$$= \sqrt{2\alpha x}$$

$$= a \sqrt{x} \qquad (a = \sqrt{2\alpha} )$$

Adding a predetermined offset value $x_2$ to the velocity y gives

$$y = a \sqrt{x - x_2}$$

On the other hand, when the address difference is not greater than $x_3$, location operation is performed by a straight line $y = b(x - X_1) + y_1$ tangential to the above-mentioned curve at the point $(x_3, y_3)$. Further, when the address difference is not greater than $x_1$, the target location velocity y is fixed to a fixed velocity $y_1$. Finally, when the address difference is not greater than $x_0$, the velocity servo is cut off. Here, the address difference value $x_0$ is determined depending upon the location accuracy. In the case where, for example, a location accuracy of $\pm$ 16 sectors is required for the target value, $x_0$ is set to 16 sectors. Further, the velocity $y_1$ is set to a value to fall within $\pm16$ sectors with respect to the target value even in the case when a drive voltage corresponding to the velocity y is greater than the minimum drive voltage for the corresponding reel; when the address difference falls within 16 sectors with respect to the target value, the velocity servo is cut off, and tape running is caused to be stopped only by mechanical loss (mechanical load).

In this embodiment, in calculating the above-described respective offset values $x_1$, $x_2$ and $x_3$, an acceleration rate changed in consideration of the above-mentioned velocity deviation is used. In actual terms, with respect to the acceleration rate 8 m/s$^2$ in the case of the 10 inch reel and the acceleration rate 3 m/s$^2$ in the case of the 14 inch reel, 6.4 m/s$^2$ and 2.7 m/s$^2$ are respectively used in the CTL mode. In addition, in the TC mode, 7.2 m/s$^2$ and 2.7m/s$^2$ are respectively used to determine the respective offset value, particularly the values $x_2$ and $x_3$.

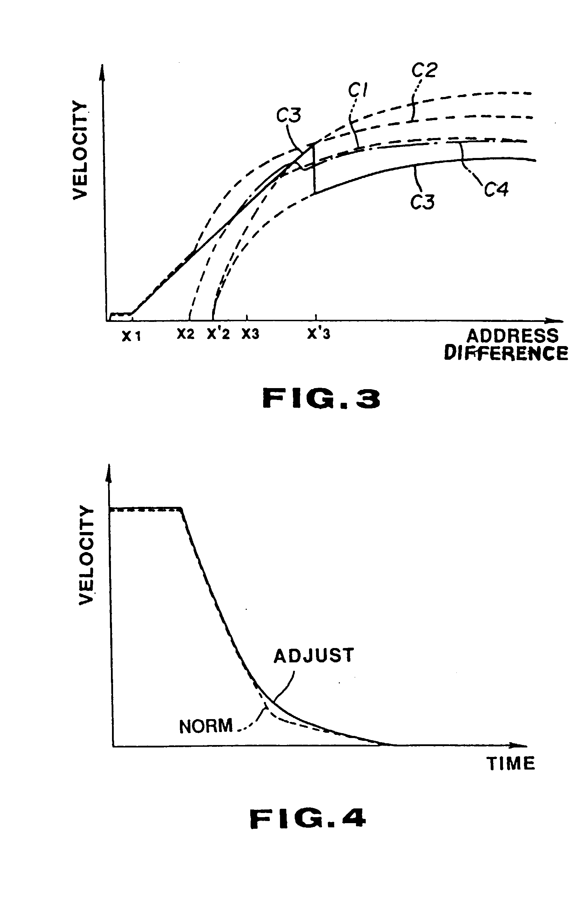

Figure 3 shows an actual example of the corrected location control characteristic curve in the TC mode. When the TC mode is selected as the tape location control, the ROM table 12 outputs a target location velocity (TGV-LOC) in accordance with the characteristic curve of Figure 3 depending upon the inputted address difference (ADR-DIF).

In Figure 3, in the case of the 10 inch reel, a theoretical acceleration rate in which a velocity deviation quantity of the target indication velocity (TGV-LOC) is taken into account is set to 6.4 m/s$^2$. In the CTL mode, this curve is used at values which are theoretically expected. In the TC mode, a curve obtained by further optimising the above-mentioned curve is used. Namely, the target location velocity (TGV-LOC) C1 written in the ROM table 12 employs a velocity curve calculated by using the acceleration rate 6.4 m/s$^2$ in the range greater than $x_3$, and employs a straight line in the range from the address $x_3$ to $x_1$. It is indicated that the location velocity C2 (CUR-TGV; NORM) for an actual reel servo with respect to the C1 (NORM) written in the ROM table 12 varies with a velocity deviation with respect to the target location velocity up to the address difference $x_2$. Here, in the CTL mode, location control could be conducted by using a characteristic curve as predicted by design so that a smooth deceleration curve would be provided. However, when the operational mode is the TC mode, a velocity predicted by design cannot be provided by such a correction only.

In view of this, the curve C3 of Figure 3 which is the further optimised target indication velocity, is utilised. When the operational mode is the TC mode, with respect to the theoretical acceleration rate 6.4 m/s$^2$ of the target indication velocity (TGV-LOC), a substantial acceleration rate was found to be 7.2 m/s$^2$ when the deviation of the velocity servo gain was 0 dB.

There exists the relationship that an actual indication velocity (CUR-TGV) is expressed as the curve C2 (NORM) with respect to the curve C1 (NORM) of the theoretical target indication velocity (TGV-LOC). Accordingly, by taking into consideration the above-mentioned relationship, the portion of the quadratic curve of the characteristic curve is withdrawn to the points $x_{2'}$ and $x_{3'}$ on the curve when the acceleration rate is 7.2 m/s$^2$. By carrying out such as adjusment, (CUR-TGV) of the actual indication velocity becomes the curve C4 (ADJUST) with respect to the adjusted curve C3 (ADJUST) of the theoretical target indication velocity (TGV-LOC). Thus, as compared to the curve C2, the tape running is decelerated in accordance with a velocity proportional to an address difference sufficiently in advance of the location target value.

By depicting, in model form, the difference between the curve C2 (NORM) and the curve C4 (ADJUST) in the actual indication velocity (CUR-TGV) in accordance with the relationship between an actual velocity and the time, the curve shown in Figure 4 is produced. In Figure 4, the curve C4 is smoothly subjected to velocity control with lapse of time. On the other hand, the curve C2 has a portion of the velocity control delayed by a certain time compared to the curve C4.

In accordance with an actual measurement result, when the deviation of the velocity servo gain is 0 dB, there exists substantially no difference between the two curves. However, when the deviation of the velocity servo gain is -3 dB, there exists a relatively large difference therebetween, and the effect thereof is noticeable in operation.

Further, as previously described, since even if control is conducted to perform an operation at the same indication speed, respective acceleration rates vary according to inertial moments dependent on the reel diameters, in the case of the 14 inch reel in the TC mode, the value of the theoretical acceleration rate is set to 2.7 m/s$^2$.

In this case, since there is hardly any deviation of actual velocity (F/V OUT) with respect to (CUR-TGV) of an actual indication velocity at about -3 dB, there is a lower deviation of the servo gain.

The relationship between the deviation of the velocity servo gain at the set acceleration rate and an actual acceleration rate with respect to the characteristic curve of the location control is as shown in the following Table 1.

TABLE 1

| Deviation of the Velocity Servo Gain (dB) | Actually Measured Accelaration Rate (m/s$^2$) | |
|---|---|---|
| | 10 inches | 14 inches |
| -3 | 7.22 | 2.79 |
| 0 | 7.08 | 2.75 |

As shown in the Table 1, at -3 db, in the case of the 10 inch reel, the actually-measured acceleration rate is 7.22 m/s$^2$ while the set acceleration rate is 6.4 m/s$^2$, and in the case of the 14 inch reel, the actually measured acceleration rate is 2.79 m/s$^2$ while the set acceleration rate is 2.7 m/s$^2$. As seen from this, there is substantially no difference between the set value and an actually measured acceleration rate based on the deviation of the velocity servo gain. In the location control of the 14 inch reel, since switching to the gain for the location control is made at the characteristic curve portion of the adjusted theoretical location control, when the address difference is more than 1024 sectors, the velocity servo gain is two times larger than that in the case of the 10 inch reel. Further, it is seen from the Table 1 that the actually-measured acceleration rate of the 14 inch reel is about 2.5 to 3 times greater than the actually-measured acceleration rate of the 10 inch reel. As previously described, since the velocity deviation has a relationship proportional to the acceleration and the time constant of the system and inversely proportional to the velocity servo gain, when the time constant of the system is substantially constant, in the case of the 14 inch reel, an actual velocity deviation may, for example, be represented as (1/2.5) x (1/2) = (1/5) by calculation. Accordingly, it is considered that the velocity deviation of the 14 inch reel is in a range of one fifth to one sixth of the velocity deviation of the 10 inch reel. Thus, there results substantially no deviation of the actual velocity (F/V OUT) with respect to the indication velocity (CUR-TGV) for the reel servo.

Hitherto, in the case of the location control in the TC mode, when a non-standard state such as an unstable operation appeared in the reel servo, the deviation of the velocity servo gain was severely adjusted to cope with such a non-standard state. However, adjustment was difficult, and adjustment was not sufficiently implemented for an unstable operation including a difference between accelerations arising from differing reel diameters. Unless adjustment was made so that the velocity servo gain was in the range of ± 1 dB, there occurred inconveniences such as overshooting of the tape. However, by carrying out the location control in the above-described manner, it is possible to provide a location control system for a tape recorder such that tape running is controlled so as to be smoothly locatable at a target position and is stopped thereat in a rapid manner, thereby reducing operational costs.

It is to be noted that this invention is not limited to the above-described technique. An alternative approach may only increase/decrease the ratio of the target indication velocity (TGV-LOC) with respect to the address difference (ADR-DIF), thus making it possible to attain similar effects and/or advantages.

By controlling the rotation of the tape driving reel motor in accordance with the location information in the tape running direction by using the above-described method, even in either mode, deviation from a theoretical value due to the velocity deviation necessarily occurring at the time of an actual servo operation will be cancelled. Thus, the tape running can be controlled so that it smoothly but rapidly approaches a target location at which it is stopped.

**Claims**

1. Tape location control apparatus for controlling transportation of a tape in accordance with a location on said tape by controlling the rotational velocity of a reel motor (18) for driving said tape, said apparatus comprising:

   means (21) for detecting a current location on said tape;
   means (14) for generating a signal (ADR-DIF) in accordance with a distance between said current location and a preselected location on said tape; and
   motor drive means (17) responsive to said signal (ADR-DIF) to control the rotational velocity of said reel motor (18);
   wherein said signal (ADR-DIF) is corrected according to an estimated deviation (CUR-TGV) which is a difference between an optimum desired rotational velocity (TGV-LOC) at which said reel motor (18) should be ideally driven and the actual velocity at which said reel motor (18) is driven by said motor drive means (17);

characterised in that the corrected signal is generated by said signal generating means (14) in accordance with the following equations;

$$y = a \sqrt{x - x2} \qquad \text{when } x \geqq x3$$

$$y = b (x - x1) + y1 \qquad \text{when } x1 \leqq x < x3$$

$$y = y1 \qquad \text{when } x0 \leqq x < x1$$

$$y = 0 \qquad \text{when } x < x0$$

$$a = \sqrt{2\alpha}$$

$$b = a \sqrt{x3 - x2} / x3$$

where y is the desired rotational velocity (TGV-LOC) of said reel motor (18), x is said distance, xO is a required accuracv in location control, $\alpha$ the acceleration of said reel motor (18, and $x_3 > x_2 > x_1$, x1, x2, x3 and y1 being values calculated in accordance with $\alpha$, wherein $\alpha$ is corrected in accordance with said estimated deviation (CUR-TGV).

2. Apparatus according to claim 1, wherein said signal generating means (14) comprises a read only memory (12) for storing said signal indicative of the desired rotational velocity of said reel motor (18).

3. Apparatus according to claim 1 or claim 2, wherein said signal (ADR-DIF) is corrected in accordance with said estimated deviation (CUR-TGV) to allow for a moment of inertia relative to a size of reel (5A) driven by said reel motor (18).

4. Apparatus according to any one of the preceding claims, wherein said location detecting means (21) is operable to detect said current location by using a reference signal, said reference signal being a control signal (CTL) recorded on a control track, a time-code signal (TC), or a count signal generated by a timer roller.

5. Apparatus according to claim 4, wherein said signal (ADR-DIF) is corrected in accordance with said estimated deviation (CUR-TGV) to allow for a delay of detection by said location detecting means (21) relative to said reference signal.

**Patentansprüche**

1. Bandpositionssteuervorrichtung zur Steuerung des. Transportes eines Bandes in Übereinstimmung mit einer Position auf dem Band durch Steuerung der Rotationsgeschwüldigkeit eines Spulenmotors (18) zum Antrieb des Bandes, wobei die Vorrichtung aufweist:

   eine Einrichtung (21) zur Erfassung der aktuellen Position auf dem Band;

   eine Einrichtung (14) zur Erzeugung eines Signales (ADR-DIF) in Übereinstimmung mit einer Entfernung zwischen der aktuellen Position und einer festgelegten Position auf dem Band; und

   eine Motoransteuereülrichtung (17), die in Abhängigkeit von dem Signal (ADR-DIF) die Rotationsgeschwindigkeit des Spulenmotors (18) steuert;

   wobei das Signal (ADR-DIF) gemäß einer geschätzten Abweichung (CUR-TGV) korrigiert wird, die eine Differenz zwischen einer gewünschten optimalen Rotationsgeschwindigkeit (TGV-LOC), mit der der Spulenmotor (18) idealerweise angetrieben werden sollte und der Ist-Geschwindigkeit ist, mit der der Spulenmotor (18) durch die Motoransteuereinrichtung (17) angetrieben wird;

   **dadurch gekennzeichnet,**
   daß das korrigierte Signal durch die Signalerzeugungseinrichtung (14) in Übereinstimmung mit den folgenden Gleichungen erzeugt wird;

$$y = a \sqrt{x - x2} \text{ wenn } x \geqq x3$$

$$y = b (x - x1) + y1 \qquad \text{wenn } x1 \leqq x < x3$$

$$y = y1 \qquad \text{wenn } x0 \leq x < x1$$

$$y = 0 \qquad \text{wenn } x < x0$$

$$a = \sqrt{2\alpha}$$

$$b = a \sqrt{x3 - x2} / x3$$

wobei y die gewünschte Rotationsgeschwindigkeit (TGV-LOC) des Spulenmotors (18), x die Entfernung, x0 eine erforderliche Genauigkeit der Positionssteuerung, $\alpha$ die Beschleunigung des Spulenmotors (18) und x3>x2>x1, x1, x2, x3 und y1 Werte sind, die in Übereinstimmung mit $\alpha$ berechnet werden, wobei $\alpha$ in Übereinstimmung mit der geschätzten Abweichung (CUR-TGV) korrigiert ist.

2. Vorrichtung gemäß Anspruch 1,
   wobei die Signalerzeugungseinrichtung (14) einen Festwertspeicher (12) zur Speicherung des Signales, das die gewünschte Rotationsgeschwindigkeit des Spulenmotors (18) angibt, speichert.

3. Vorrichtung gemäß Anspruch 1 oder 2,
   wobei das Signal (ADR-DIF) in Übereinstimmung mit der geschätzten Abweichung (CUR-TGV) korrigiert ist, um ein Trägheitsmoment bezüglich der Größe der durch den Spulenmotor (18) angetriebenen Spule (5A) zu berücksichtigen.

4. Vorrichtung gemäß einem der vorhergehenden Ansprüche,
   wobei die Positionserfassungseinfichtung (21) ausgebildet ist, die aktuelle Position mittels eines Referenzsignales zu erfassen, wobei das Referenzsignal ein Steuersignal (CTL), das auf einer Steuerspur aufgezeichnet ist, ein Zeitcodesignal (TC) oder ein durch eine Zeitgeberwalze erzeugtes Zählsignal ist.

5. Vorrichtung gemäß Anspruch 4,
   wobei das Signal (ADR-DIF) in Übereinstimmung mit der geschätzten Abweichung (CUR-TGV) korrigiert wird, um eine Verzögerung der Erfassung durch die Positionserfassungseinrichtung (21) bezüglich des Referenzsignales zu berücksichtigen.

**Revendications**

1. Dispositif de commande de position de bande pour commander le défilement-d'une bande en fonction d'une position sur ladite bande en commandant la vitesse de rotation d'un moteur de bobine (18) pour entraîner ladite bande, ledit dispositif comprenant :

   un dispositif (21) pour détecter une position actuelle sur ladite bande ;
   un dispositif (14) pour générer un signal (ADR-DIF) selon une distance entre ladite position actuelle et une position présélectionnée sur ladite bande ; et
   un dispositif de commande de moteur (17) sensible audit signal (ADR-DIF) pour commander la vitesse de rotation dudit moteur de bobine (18) ;
   dans lequel ledit signal (ADR-DIF) est corrigé selon un écart estimé (CUR-TGV) qui est une différence entre une vitesse de rotation désirée optimale (TGV-LOC) à laquelle ledit moteur de bobine (18) devrait être idéalement commandé et la vitesse réelle à laquelle ledit moteur de bobine (18) est commandé par ledit dispositif de commande moteur (17) ;

   caractérisé en ce que le signal corrigé est généré par ledit dispositif de génération de signal (14) selon les équations suivantes :

$$y = a \sqrt{x - x2} \text{ lorsque } x \geq x3$$

$$y = b(x - x1) + y1 \text{ lorsque } x1 \leq x < x3$$

$$y = y1 \text{ lorsque } x0 \leq x < x1$$

$$y = 0 \text{ lorsque } x < x0$$

$$a = \sqrt{2\alpha}$$

$$b = a \sqrt{x3 - x2} / x3$$

où y est la vitesse de rotation désirée (TGV-LOC) dudit moteur de bobine (18), x est ladite distance, x0 est une précision nécessaire dans une commande de position, $\alpha$ est l'accélération dudit moteur de bobine (18), et x3 > x2 > x1, x1, x2, X3 et y1 étant des valeurs calculées selon $\alpha$, où $\alpha$ est corrigé selon ledit écart estimé (CUR-TGV).

2. Dispositif selon la revendication 1, dans lequel ledit dispositif de génération de signal (14) comprend une mémoire ROM (12) pour stocker ledit signal indicateur de vitesse de rotation désirée dudit moteur de bobine (18).

3. Dispositif selon la revendication 1 ou la revendication 2, dans lequel ledit signal (ADR-DIF) est corrigé selon ledit écart estimé (CUR-TGV) pour tenir compte d'un moment d'inertie en fonction d'une taille de bobine (5A) entraînée par ledit moteur de bobine (18).

4. Dispositif selon l'une quelconque des revendications précédentes, dans lequel ledit dispositif de détection de bobine (21) est utilisable pour détecter ladite position actuelle en utilisant un signal de référence, ledit signal de référence étant un signal de commande (CTL) enregistré sur une piste de commande, un signal de code temporel (TC), ou un signal de commande généré par un rouleau de temporisation.

5. Dispositif selon la revendication 4, dans lequel ledit signal (ADR-DIF) est corrigé selon ledit écart estimé (CUR-TGV) pour tenir compte d'un retard de détection par ledit dispositif de détection de position (21) par rapport audit signal de référence.

**FIG.1**

TARGET LOCATION

*11*

ROM TABLE *12*

LIMITER *13*

*14*

D/A CONVERTER *15*

VELOCITY SERVO BLOCK *16*

MOTOR DRIVE *17*

*19*

REEL MOTOR *18*

CURRENT POSITION DETECT *21*

*20*

EP 0 466 414 B1

$$y = a\sqrt{x}$$

$$y = b(x - x_1) + y_1$$

$$y = a\sqrt{x - x_2}$$

**FIG. 2**

**FIG. 6**

**FIG.3**

**FIG.4**

**FIG.5**